# EUROPEAN PATENT SPECIFICATION

(11) **EP 2 530 989 B1**
(45) Date of publication and mention of the grant of the patent: **03.06.2015**
(21) Application number: 12305546.9
(22) Date of filing: 16.05.2012
(51) Int. Cl.: H04W 4/00, H04W 72/12, H04L 29/08

(54) **Mobile transceiver, base station transceiver, data server, and related apparatuses, methods, and computer programs**
Mobiler Sender-Empfänger, Basisstations-Sender-Empfänger, Datenserver und zugehörige Vorrichtungen, Verfahren und Computerprogramme
Émetteur/récepteur mobile, émetteur/récepteur de station de base, serveur de données et appareils correspondants, procédés et programmes informatiques

(30) Priority: 04.06.2011 EP 11305685
(43) Date of publication of application: 05.12.2012
(73) Proprietor: ALCATEL LUCENT, 92100 Boulogne-Billancourt (FR)
(72) Inventor: Valentin, Stefan, 70378 Stuttgart (DE); Kaschub, Matthias, 72813 St. Johann (DE); Proebster, Magnus, 72127 Kusterdingen (DE); Werthmann, Thomas, 70374 Stuttgart (DE); Müller, Christian, 70806 Kornwestheim (DE)
(74) Representative: Knecht, Ulrich Karl

(56) References cited:
- US-A1- 2007 159 993
- US-A1- 2008 137 537
- GIUSEPPE BIANCHI ET AL: "A Programmable MAC Framework for Utility-Based Adaptive Quality of Service Support", IEEE JOURNAL ON SELECTED AREAS IN COMMUNICATIONS, IEEE SERVICE CENTER, PISCATAWAY, US, vol. 18, no. 2, 1 February 2000 (2000-02-01), XP011055075, ISSN: 0733-8716

## Description

Embodiments of the present invention relate to communication systems, more particularly but not exclusively to packet data transmission in mobile communication systems.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to feature phones, this application mix leads to a number of new characteristics. For example, highly dynamic load statistics result.

Conventional cellular networks become more and more overloaded by data traffic; cf. G. Maier, F. Schneider, A. Feldmann. "A First Look at Mobile Hand-held Device Traffic", In Proc. Int. Conference on Passive and Active Network Measurement (PAM '10), April 2010. This high load is mainly caused by smart handhelds such as smartphones, tablets, and laptops, which may generate substantially more traffic than previous handheld generations, lead to complex traffic requests that may not be efficiently served at the base station, and span more and more user sessions over multiple cells, decreasing the network efficiency per session.

Furthermore, smart handhelds provide more information about the user, when compared to previous handheld generations. Context-Aware Resource Allocation (CARA) can exploit such information about the user's device, its location, and the communication demands of its currently running applications. Details on CARA can, for example, be found in M. Proebster, M. Kaschub, and S. Valentin "Context-Aware Resource Allocation to Improve the Quality of Service of Heterogeneous Traffic", Proc. IEEE International Conference on Communications (ICC), Jun. 2011, or in EP11305685.7. By being aware of the user's context a Base Station (BS) can substantially reduce the network load without sacrificing the user's Quality of Service (QoS), M. Proebster, M. Kaschub, T. Werthmann, and S. Valentin, "Context-Aware Resource Allocation for Cellular Wireless Networks", EURASIP Journal on Wireless Communications and Networking (WCN), submitted for review Oct. 2011.

G. Bianchi et al, "A Programmable MAC Framework for Utility-Based Adaptive Quality of Service Support", IEEE JOURNAL ON SELECTED AREAS IN COMMUNICATIONS, VOL. 18, NO. 2, FEBRUARY 2000, discloses the design and evaluation of a programmable medium access control framework, which is based on a hybrid centralized/distributed data link controller. The programmable framework and its associated algorithms are capable of supporting adaptive real-time applications over time-varying and bandwidth limited networks (e.g., wireless networks) in a fair and efficient manner taking into account application-specific adaptation needs. The framework is flexible, extensible and supports the dynamic introduction of new adaptive services on-demand. As part of the service creation process, applications interact with a set of distributed adaptation handlers to program services without the need to upgrade the centralized adaptation controller. This approach is in contrast to techniques that offer a fixed set of "hardwired" services at the data link from which applications select. A centralized adaptation controller responsible for the fair allocation of available bandwidth among adaptive applications is driven by application specific bandwidth utility curves. A set of distributed adaptation handlers execute at edge devices interacting with a central controller allowing applications to program their adaptation needs in terms of utility curves, adaptation time scales and adaptation policy. The central controller offers a set of simple meta-services called "profiles" that distributes handlers used to build adaptive real-time services.

Document 2008 137 537 A1 relates to a centralized packet scheduler for a wireless communications network such as HSDPA, 1xEV-DO Revisions 0, A and B, WiMAX, infrastructure-mode WiFi and any other type of network where centralized packet scheduling is applicable. The document provides a utility-opportunity cost packet scheduling scheme for high-speed access that simultaneously achieves efficiency, fairness, user satisfaction, and flexibility. The scheme employs a flexible utility function that incorporates the channel quality conditions of the users as well as a fairness measure. The utility function maximizes user satisfaction as perceived by the service provider while ensuring that users with favourable instantaneous channel quality conditions do not monopolize the radio resources. In addition, the scheme uses an opportunity cost function to allow the service provider to optimize fairness in the context of network throughput and hence, to control the system capacity. The scheme combines the requirements of users (e.g., throughput, delay, fairness, etc.) with the requirements of the service provider (e.g., revenue) in making scheduling decisions.

Document US 2007 159 993 A1 describes a concept in which a base station includes a scheduler to determine a location of a user terminal within a cell of a wireless system. The cell has a cell boundary. The scheduler also determines a subcarrier frequency diverse resource allocation for a call on the user terminal in response to the location of the user terminal being within a predetermined distance from an edge of the cell boundary. The scheduler further determines a subcarrier frequency selective resource allocation for the call on the user terminal in response to the location of the user terminal being beyond a predetermined distance from the edge of the cell boundary. The base station also includes a transceiver to transmit the call according to the subcarrier frequency diverse resource allocation and the subcarrier frequency selective resource allocation.

### Summary

It is one finding of the present invention that CARA concepts and algorithms may run at a Data Link Control (DLC) layer of a BS, and although they may provide tremendous gains, they rely on context information from the handheld's higher layers. According to another finding this essential information for the CARA algorithms can be provided by a feedback protocol, which may signal context information from the handheld to the BS and/or to the core network behind it. Moreover, handheld information from layers higher than the DLC may be provided to the BS' DLC layer. Furthermore, embodiments are based on the finding that a signaling concept and general types of context information can be provided by several signaling architectures and protocols.

The invention concerns methods, apparatuses and computer program as defined in appended independent claims 1, 4, 8, 11-13, 15. Embodiments of the invention are defined in the appended claims, and are based on the finding that mobile devices may signal context information to the BS or to the core network. Moreover, other information is already signaled during the uplink. In particular, mobile devices may signal Channel Quality Information (CQI), acknowledgements for retransmission schemes and scheduling requests to the base station, details of such signaling concepts can be found, for example, in 3G Partnership Project (3GPP) Technical Specification (TS) 36.300 V11.0.0, "Evolved Universal Terrestrial Radio Access (E-UTRA) and Evolved Universal Terrestrial Radio Access Network (E-UTRAN), Overall description", Dec. 2011. It is a further finding that this may happen entirely at the DLC in a dedicated control channel. Furthermore, these feedback procedures may not support information transfer between layers above and the DLC. Moreover, the feedback procedures may have no access to such higher layer information at the handheld. Thus, existing DLC signaling may not provide context information from higher layers (e.g., locations, application status or requirements) to the BS. Although the 3GPP DLC includes methods to signal Quality of Service (QoS) requirements from the handheld to the BS, such signaling is based on a fixed table and header field of limited space. Such fixed signaling may not be flexible enough to signal utility functions or arbitrary further context information to the BS.

It is a further finding that at the network layer, e. g. in Internet Protocol (IP) packets, there is a header field to signal a QoS-class, cf. K. Nichols, S. Blake, F. Baker, and D. Black, "Definition of the Differentiated Services Field (DS Field) in the IPv4 and IPv6 Headers", IETF RFC 2474, Dec. 1998. However, this field has a size of 6 bit and is used to classify the packet in flight. It may not be possible to carry all necessary information for the applications' requirements and the classification of data packets to application transactions within this header field. Hence, a mechanism may be desirable to directly signal information from the application layer of the mobile device to the DLC at the BS.

Moreover, it is a finding that one approach to provide such cross-layer signaling can be Deep Packet Inspection (DPI). By inspecting the user's packets in the BS queues, cf. Nguyen, T.T.T.; Armitage, G.; , "A Survey of Techniques for Internet Traffic Classification Using Machine Learning," Communications Surveys & Tutorials, IEEE , Fourth Quarter 2008, the access network can extract information from layers above the DLC. However, this method may be limited to unencrypted packets, can add high processing and memory costs, can add high communication delay, and only provides a limited set of information to the BS. Compared to classifying inspected packets, directly measuring the context of a user (e.g., its location, mobility path, running applications and their QoS requirements) at the handheld may be more accurate and efficient. Embodiments are based on the finding that a middleware or an entity at the handheld may access such information and may explicitly signal it to the BS.

Embodiments may provide cross-layer signaling architectures and protocols for transferring context information from the higher layers of a mobile transceiver to the DLC of a base station transceiver. To do so, embodiments can make use of mechanisms to signal QoS requirements of application-layer data flows to a DLC. This signaling procedure can, for example, be integrated into the user's or a mobile's feedback communication in the uplink. Further procedures can map DLC data frames to application layer flows for the downlink.

Embodiments provide an apparatus for a mobile transceiver for, or in, a mobile communication system, i.e. embodiments may provide said apparatus to be operated by or comprised in a mobile transceiver. In the following, the apparatus will also be referred to as mobile station transceiver apparatus. Moreover, the terms mobile communication network and mobile communication system will be used synonymously. The mobile communication system may, for example, correspond to one of the 3GPP-standardized mobile communication networks, as e.g. Long Term Evolution (LTE), an LTE-Advanced (LTE-A), a Universal Mobile Telecommunication System (UMTS) or a UMTS Terrestrial Radio Access network (UTRAN), an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFDMA) network, etc., or mobile communication networks with different standards, e.g. Worldwide Interoperability for Microwave Access (WIMAX).

The mobile communication system further comprises a base station transceiver. The base station transceiver can be operable to communicate with a number of mobile transceivers. In embodiments, the mobile communication system may comprise mobile transceivers and base station transceivers, wherein the base station transceivers may establish macro cells or small cells, as e.g. pico-, metro-, or femto cells. A mobile transceiver may correspond to a smartphone, a cell phone, a laptop, a notebook, a personal computer, a Personal Digital Assistant (PDA), a Universal Serial Bus (USB) -stick, a car, etc. it may also be referred to as handheld or mobile. A mobile transceiver may also be referred to as User Equipment (UE) in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB (eNB), a Base Transceiver Station (BTS), an access point, a remote radio head, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate multiple cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas.

In embodiments the mobile transceiver apparatus comprises means for extracting context information from an application being run on the mobile transceiver, context information from an operation system being run on the mobile transceiver, or context information from hardware drivers or hardware of the mobile transceiver. The context information comprises information on a state of the application and/or information on a state of the mobile transceiver. The means for extracting may correspond to an extractor, a processor, a micro-processor, a controller, etc. The mobile transceiver apparatus further comprises means for communicating data packets with the base station transceiver, wherein the data packets comprise payload data packets and control data packets. The means for communicating may correspond to a communicator, a transceiver, a transmitter, a receiver, etc., e.g. in line with one of the above listed communication systems. The means for communicating is operable to communicate payload data packets associated with the application with a data server through the base station transceiver. The data server may correspond to a server providing the actual application data, it can also correspond to a gateway of the mobile communication system, as e.g. an Internet gateway such as a Public Data Network GateWay (PDN-GW).

The mobile transceiver apparatus further comprises means for providing the context information to the base station transceiver, wherein the context information is comprised in a payload data packet or in a control data packet. Hence, embodiments can make use of different signaling and classification approaches. In some embodiments a dedicated control channel between the mobile device and the base station can be used. That is to say, the mobile transceiver may transmit requirements and classification rules to the BS and the BS may map this information to the downlink DLC frames. In other words, in some embodiments layer 2 or layer 3 signaling may be used in terms of control data packets to provide the context information from the mobile transceiver apparatus to the BS. In terms of 3GPP a Signaling Radio Bearer (SRB) may, for example, be used to carry the context information as part of a Radio Resource Control (RRC) protocol.

Hence, embodiments also provide a corresponding apparatus for a base station transceiver for, or in, a mobile communication system, which further comprises a mobile transceiver. That is to say, embodiments may provide said apparatus to be operated by or comprised in a base station transceiver, which can be compliant to one or more of the above listed communication systems. In the following, the apparatus will also be referred to as base station transceiver apparatus. The base station transceiver apparatus comprises means for receiving control data packets and payload data packets. The means for receiving may correspond to a receiver or transceiver compliant to one or more of the above listed systems. The payload data packets are associated with an application being run on the mobile transceiver. The base station transceiver apparatus further comprises means for obtaining context information associated with the application from a control data packet or from a payload data packet. The means for obtaining may correspond to an obtainer, a processor, a micro-processor, a controller, etc.

Moreover, the base station transceiver apparatus may comprise means for scheduling the mobile transceiver for transmission of the data packets based on the context information. The means for scheduling may correspond to a scheduler, a processor, a micro-processor, a controller, etc. The term scheduling is to be understood as the assignment of radio resources, such as time, frequency, power, code or spatial resources, for transmission or reception of data packets. It may refer to uplink, downlink or both.

In the following the context information is assumed to comprise one or more elements of the group of information on a quality of service requirement of the application, priority information of the data packets associated with the application, information on a unity of a plurality of the data packets of the application, information on a load demand of the application, information on a delay or error rate constraint of the application, information on a window state at the mobile transceiver, information on a memory consumption of the mobile transceiver, information on a processor usage of the application running on the mobile transceiver, information on a current location, speed, orientation of the mobile transceiver, or a distance of the mobile transceiver to another mobile transceiver. The context information or a transaction data packet may comprise mapping information between one or more data packets and a scheduling queue at the base station transceiver.

In other words, the context information may comprise information on the application, for example, it may comprise an information on a user focus, i.e. whether the application is currently displayed in the foreground or in the background, information on the type of application, i.e. web browsing, interactive, streaming, conversational, etc., information on the type of request, i.e. whether the requested data is just a prefetch or it is to be displayed immediately, information on certain delay or QOS requirements, etc.

In other words, the context information can be provided per application. For example, two streaming applications are running in parallel on the mobile transceiver. According to the prior art, both applications' data would be mapped to streaming transport channels at the lower layers. Therefore, according to the prior art, data from the two applications would not be distinguished by a scheduler. According to embodiments, the context information may be available for the applications separately. For example, the context information of one application may indicate that it is displayed in the foreground; the context information of the other application may indicate it is in background. Therefore, embodiments can provide the advantage that these two applications and their data can be distinguished by the scheduler and the application running in the foreground can be prioritized. Hence, separate or differentiating context information may be provided even for applications of the same type, e.g. two web browsing sessions. The context information can as well be extracted from the operation system, as an application may not have the information on whether it is in foreground or background. This information, also determining a state of the application, may be extracted from a window manager of the operation system of the mobile transceiver.

The unity of the data packets may refer to information indicating that a number of data packets belong together, for example, the application can correspond to an image displaying application and the image data is contained in a plurality of data packets. Then the context information may indicate how many data packets refer to one image. This information may be taken into account by the scheduler. In other words, from the context information the scheduler may determine a certain relation between the data packets, e.g. the user may only be satisfied if the whole image is displayed, therefore all packets referring to the image should be transmitted to the mobile transceiver in an adequate time interval. Therewith the scheduler can be enabled to plan ahead.

In embodiments the means for extracting can be adapted to extract the context information from an operation system of the mobile transceiver or from the application being run on the mobile transceiver. In other words, the operation system of the mobile transceiver can provide the context information, e.g. as state information of an application (foreground/background, active/suspended, standby, etc.). Another option is that the application itself provides the context information.

Hence, in line with the above description the base station transceiver apparatus may receive the context information via layer 2 or layer 3, e.g. RRC, control data packets. In other embodiments signaling at the application layer may be used, e.g. in terms of IP packets. Since the IP address of the base station transceiver may be unknown at the mobile transceiver apparatus an any-cast mechanism may be used. Hence, data packets can be addressed to the base station using any-cast data packets, and which are interpreted by the base station transceiver apparatus extracting the context information. The context information can then be used at the base station transceiver apparatus in line with the above description. The term any-cast is understood as mechanism in a network, where an according data packet is interpreted by any next node, which receives the data packet. An any-cast indication in a data packet may tell the base station transceiver apparatus that the packet is meant to be interpreted, as the base station transceiver is the first node to receive said data packet. Any-cast can be used on different layers in the protocol stack. For example, an any-cast data packet may correspond to an IP data packet with an any-cast indication for the base station transceiver. The indication may, for example, be comprised in the Type Of Service (TOS) field in the header of the IP packet. In other embodiments the Universal Datagram Protocol (UDP) can be used and the any-cast indication may correspond to a certain port given in the IDP header, e.g. a certain destination port.

In further embodiments, the mobile transceiver apparatus may comprise means for composing a transaction data packet as part of a transaction protocol. The transaction data packet comprises the context information. In some embodiments the transaction data packet is communicated to the base station transceiver using an any-cast payload data packet in line with the above description. A transaction data packet or context information can be communicated to the base station transceiver using a link layer protocol control data packet. The transaction protocol may then use lower protocol layer services, such as layer 1 or PHYsical layer (PHY), layer 2, e.g. Medium Access Control (MAC) or Radio Link Control (RLC). Moreover, the transaction protocol may use the so called user-plane protocols for payload data packet transmission. Hence, the transaction protocol may also use UDP, IP, the packet Data Convergency Protocol (PDCP). The transaction protocol may use the control plane and it may, for example, be part of RRC.

In further embodiments the transaction data packet is communicated to the data server using a unicast payload data packet, e.g. using IP. In other words, the transaction data packet may then be received at the base station from the data server using a unicast payload data packet, e.g. via IP. Hence, the context information may not be communicated directly to the base station transceiver but indirectly through the data server. In another embodiment a control data packet may be used to signal the context information from the mobile transceiver apparatus to the base station transceiver apparatus. Thus, the transaction data packet or the context information may be received from the mobile transceiver using a link layer protocol control data packet. The base station transceiver apparatus may then forward classification information to the data server, e.g. an Internet gateway. The context information can then be received from the data server, which is provided with classification information from the base station transceiver. The context information may then correspond to a tag in a data packet received from the data server. The classification information may comprise QoS settings or requirements for a scheduler queue at the base station transceiver, a transaction context at the scheduler of the base station transceiver, respectively.

Hence, the gateway or data server may classify downlink packets accordingly and tag them to provide the mapping information to the base station transceiver. In yet another embodiment, the mobile transceiver apparatus performs IP signaling of the context information directly to the data server. A classification can then be carried out at the data server, but, in addition to tags, the data server may signal the application flow's QoS requirements to the base station transceiver. The context information or a transaction data packet may comprise mapping information between one or more data packets and a scheduling queue at the base station transceiver.

In embodiments of the base station transceiver apparatus the means for scheduling can be operable to determine a transmission sequence for a plurality of transactions. The plurality of transactions may refer to a plurality of applications being run by one or more mobile transceivers. A transaction may correspond to a plurality of data packets for which the context information indicates unity. The order of the sequence of transactions can be based on a utility function, which may depend on a completion time of a transaction, which is determined based on the context information.

In other words, the context information may be evaluated using a utility function. The utility function may be a measure for the user satisfaction and therefore depend on a completion time of a transaction. For example, for a transaction comprising data packets of a web page, a web browsing application has requested the completion time may, for example, be 2s. In other words, full user satisfaction may be achieved when the full content of the web page is transmitted in less than 2s. Otherwise, the user satisfaction and therewith the utility function will degrade. The sequence of the transactions can be determined in different ways in embodiments. In some embodiments the transmission sequence is determined from an iteration of multiple different sequences of transactions. The multiple different sequences can correspond to different permutations of the plurality of transactions. The means for scheduling can be adapted to determine the utility function for each of the multiple different sequences and it can be further adapted to select the transmission sequence from the multiple different sequences corresponding to the maximum sum utility function. In other words, in embodiments the scheduling decision may be determined based on an optimized user satisfaction or utility function, where the optimization may be based on a limited set of sequences.

In some embodiments, the actual transmission sequence or scheduling decision may be further based on the radio condition of a particular user, e.g. the means for scheduling can be adapted to further modify the transmission sequence based on the supportable data rate for each transaction. In other embodiments other fairness criteria or rate or throughput criteria may be considered.

Accordingly, embodiments provide an apparatus for, or in, a data server, i.e. embodiments may provide said apparatus to be operated by or comprised in a data server. In the following, the apparatus will also be referred to as data server apparatus. The data server communicates data packets associated with an application being run on a mobile transceiver through a mobile communication system to the mobile transceiver, in line with the above description. The data server apparatus comprises means for deriving context information for the data packets based on classification information received from a base station transceiver. The means for deriving may correspond to a deriver, a processor, a micro-processor, a controller, etc. The data server apparatus further comprises means for transmitting the context information along with the data packets to the mobile communication system. The means for transmitting may correspond to a transmitter, e.g. an interface for communicating with the base station transceiver, e.g. an Ethernet interface. In some embodiments a wireless interface between the data server and the base station is conceivable, e.g. when the data server correspond to another mobile transceiver.

As it has been described above, the data server apparatus may further comprise means for composing a data packet. The means for composing may correspond to a composer, a processor, a micro-processor, a controller, etc. The data packet may comprise application data packets and a tag with mapping information for the data packet to a scheduling queue at the base station transceiver, in line with what is described above. The means for composing may be operable to compose a transaction data packet, which comprises application data packets and the context information, to compose a data packet header with the context information, or to compose a data packet comprising a quality of service requirement of the application.

Embodiments may further provide the according methods. That is to say, embodiments may provide a method for a mobile transceiver in a mobile communication system. The mobile communication system comprises a base station transceiver. The method comprises extracting context information from an application being run on the mobile transceiver, context information from an operation system being run on the mobile transceiver, or context information from hardware drivers or hardware of the mobile transceiver. The context information comprises information on a state of the application and/or information on a state of the mobile transceiver. The method further comprises communicating data packets with the base station transceiver, wherein the data packets comprise payload data packets and control data packets. The method further comprises communicating payload data packets associated with the application with a data server through the base station transceiver. The method further comprises providing the context information to the base station transceiver, wherein the context information is comprised in a payload data packet or in a control data packet.

Embodiments further provide a method for a base station transceiver in a mobile communication system. The mobile communication system further comprises a mobile transceiver. The method comprises receiving control data packets and payload data packets, wherein the payload data packets are associated with an application being run on the mobile transceiver. The method further comprises obtaining context information on the data packets associated with the application from a control data packet or from a payload data packet. The method further comprises scheduling the mobile transceiver for transmission of the data packets based on the context information.

Embodiments further provide a method for a data server. The data server communicates data packets associated with an application being run on a mobile transceiver through a mobile communication system to the mobile transceiver. The method comprises deriving context information for the data packets based on classification information received from a base station transceiver and transmitting the context information along with the data packets to the mobile communication system.

Embodiments may further provide a mobile transceiver comprising the above described mobile transceiver apparatus, a base station transceiver comprising the above described base station transceiver apparatus, a data server comprising the above described data server apparatus, and/or a mobile communication system comprising the mobile transceiver, the base station transceiver, and/or the data server.

Embodiments may enable a radio access network to exploit context information from higher layers. This information about the user, the handheld, and its environment can be used to efficiently allocate wireless channel resources according to a user's requirements. Unlike existing signaling for QoS differentiation, the provided context information may go beyond a small set of QoS classes. By signaling an application-layer flow's unique utility function in data rate and delay, embodiments may convey the heterogeneous QoS requirements of modem smartphone applications to the BS. Even different requirements of the same application may be captured. Further information on the user's location, its previous or planned mobility path, the application in the foreground of the screen, device specifics (e.g., screen size) may complement the picture embodiments can provide to the radio access network.

In embodiments the context-awareness may enable resource allocation concepts that can decrease the wireless network's traffic load without sacrificing the users' QoS, provide seamless QoS over multiple cells even to mobile users and increase the data rate and fairness for mobile users.

Some details on the benefit of long term resource allocations can also be found in H. Abou-zeid, S. Valentin, and H. Hassanein, "Context-Aware Resource Allocation for Media Streaming: Exploiting Mobility and Application-Layer Predictions", Proc. Capacity Sharing Workshop, Oct. 2011, and EP 11306323.4. In other words, embodiments enabling context signaling may be a prerequisite to apply powerful new resource allocation approaches that substantially improve the service for mobile users and serve more users at equal QoS. Compared to the current QoS signaling at LTE's DLC, embodiments may provide a larger degree of information to the radio access network. In addition to QoS classes, utility functions and further context information can be provided.

Compared to Packet Inspection (PI), embodiments may provide context information even for encrypted data streams. As PI may add high effort on memory and processing power, embodiments may save some hardware costs. Moreover, embodiments may ensure a low, constant delay, which may not be the case with PI. Some embodiments may use DLC-based signaling approaches, while other embodiments may use user-plane signaling, which may not require standardization. Hence, embodiments may be entirely implemented as a handheld-middleware and as software running in the radio access network. This may enable embodiments to be easily rolled out and updated via existing web-infrastructure (e.g., Android market or other App stores).

Some embodiments comprise a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

### Brief description of the Figures

Some embodiments of apparatuses and/or methods will be described in the following by way of example only, and with reference to the accompanying figures, in which
Fig. 1 shows an embodiment of an apparatus for a mobile transceiver, an apparatus for a base station transceiver and an apparatus for a data server;
Fig. 2 illustrates an embodiment of a communication network with an embodiment of a mobile device and an embodiment of a base station;
Fig. 3 illustrates two transactions in an embodiment;
Fig. 4 shows a utility function in an embodiment;
Fig. 5 illustrates embodiments in an EPC;
Fig. 6 illustrates protocol stacks in an embodiment making use of a dedicated control channel;
Fig. 7 illustrates protocol stacks in an embodiment making use of signaling in a user plane;
Fig. 8 illustrates protocol stacks in an embodiment making use of a dedicated control channel and downlink packet classification at a data server;
Fig. 9 illustrates protocol stacks in an embodiment making use of signaling in a data plane with indirect provision of context information;
Fig. 10 shows a block diagram of a flow chart of an embodiment of a method for a mobile transceiver;
Fig. 11 shows a block diagram of a flow chart of an embodiment of a method for a base station transceiver; and
Fig. 12 shows a block diagram of a flow chart of an embodiment of a method for a data server.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

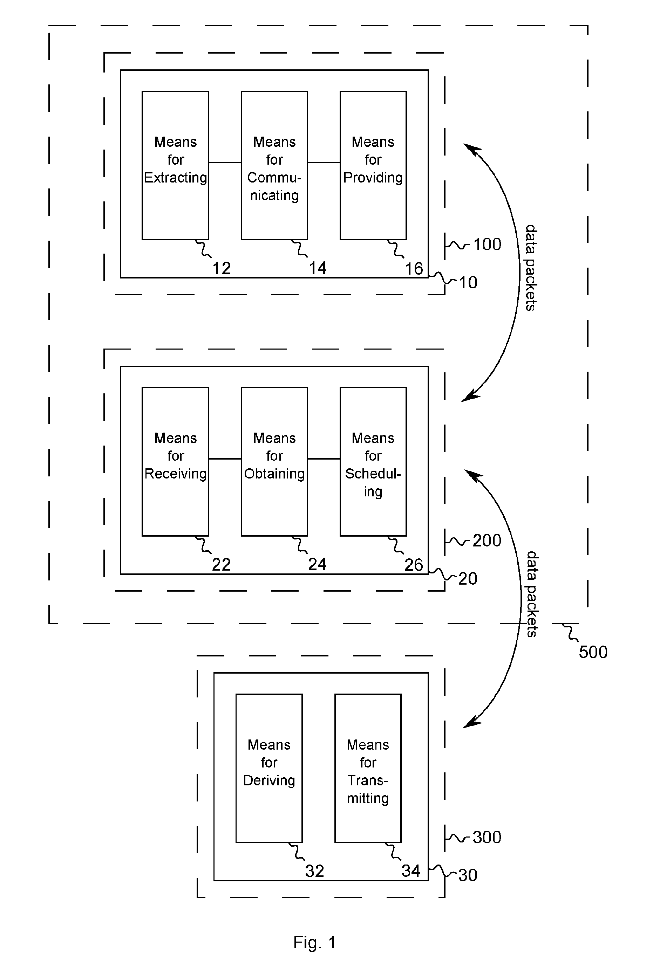

Fig. 1 shows an embodiment of an apparatus 10 for a mobile transceiver 100, an apparatus 20 for a base station transceiver 200, and an apparatus 30 for a data server 300. Fig. 1 shows at the top the apparatus 10 for a mobile transceiver 100 for a mobile communication system 500. In the embodiment the mobile communication system 500 system comprises a base station transceiver 200, which is displayed in the center of Fig. 1. The base station transceiver 200 is coupled to a data server 300, which is displayed at the bottom of Fig. 1, all of which will be detailed subsequently.

The mobile transceiver apparatus 10 comprises means for extracting 12 context information from an application being run on the mobile transceiver 100, context information from an operation system being run on the mobile transceiver 100, or context information from hardware drivers or hardware of the mobile transceiver 100, the context information comprising information on a state of the application and/or information on a state of the mobile transceiver 100. The mobile transceiver apparatus 10 further comprises means for communicating 14 data packets with the base station transceiver 200, wherein the data packets comprise payload data packets and control data packets. The means for communicating 14 is operable to communicate payload data packets associated with the application with a data server 300 through the base station transceiver 200. The mobile transceiver apparatus further comprises means for providing 16 the context information to the base station transceiver 200. The context information is comprised in a payload data packet or in a control data packet. As can be seen from Fig. 1 the means for extracting 12, the means for communicating 14, and the means for providing 16 are coupled to each other.

The communication network in the present embodiment corresponds to a 3rd Generation Partnership Project Long Term Evolution (3GPP LTE) system with an Evolved Packet Core (EPC).

Fig. 1 further shows an embodiment of an apparatus 20 for the base station transceiver 200. The base station transceiver apparatus 20 comprises means for receiving 22 control data packets and payload data packets. The payload data packets are associated with an application being run on the mobile transceiver 100. The base station transceiver apparatus further comprises means for obtaining 24 context information associated with the application from a control data packet or from a payload data packet and means for scheduling 26 the mobile transceiver 100 for transmission of the data packets based on the context information. As shown in Fig. 1 the means for receiving 22, the means for obtaining 24, and the means for scheduling 26 are coupled to each other.

Moreover, Fig. 1 illustrates an embodiment of an apparatus 30 for the data server 300, which communicates data packets associated with the application being run on a mobile transceiver 100 through the mobile communication system 500 to the mobile transceiver 100. The data server apparatus 30 comprises means 32 for deriving context information for the data packets based on classification information received from the base station transceiver 200 and means 34 for transmitting the context information along with the data packets to the mobile communication system 500. The means for deriving 32 and the means for transmitting 34 are coupled to each other.

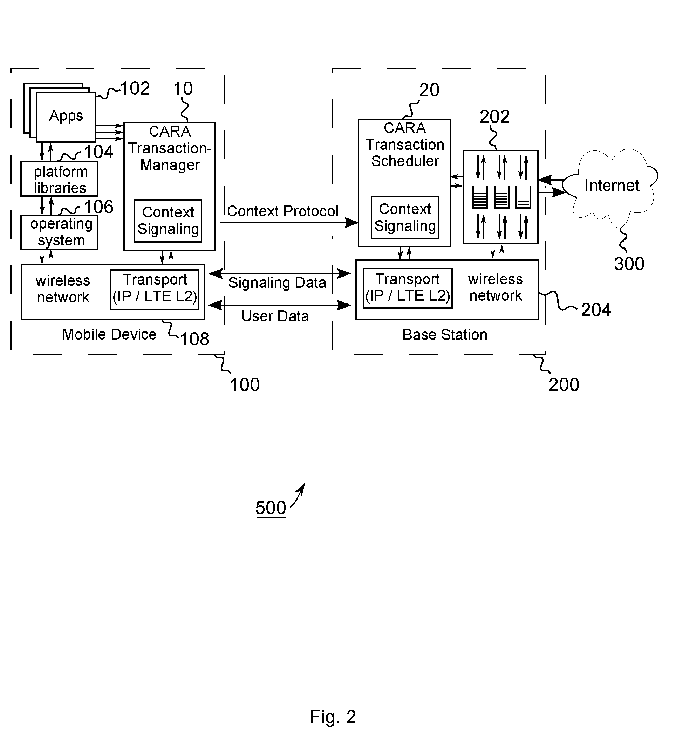

In the following an embodiment for cross-layer signaling of context information for the example of a 3GPP LTE cellular radio access network 500 will be described. Fig. 2 illustrates the communication network 500 with the embodiment of the mobile device 100 and the embodiment of the base station 200. Fig. 2 illustrates a Context-Aware Resource Allocation system architecture, with the respective components of the Context-Aware Resource Allocation (CARA) framework, more details can be found in EP 11305685. Fig. 2 shows the relevant components for signaling.

In the following description of embodiments it is assumed that the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver 100, information on a current location, speed, orientation of the mobile transceiver 100, mapping information between one or more data packets and a scheduling queue, or a distance of the mobile transceiver 100 to another mobile transceiver.

On the side of the mobile transceiver 100 Fig. 2 illustrates several applications (Apps) 102, which run on the mobile terminal. The applications 102 interact with platform libraries 104, which in turn interact with the operating system 106 of the mobile transceiver 100. The applications 102, the platform libraries 104, and/or the operating system 106 may provide context information to the mobile transceiver apparatus 10, which is implemented as CARA transaction manager 10 with context signaling. The operating system 106 as well as the transaction manager 10 interacts with the wireless network 108, the lower layers thereof, respectively. In the present embodiment the wireless network 108 may provide transport layer services in terms of LTE layer 2 or IP-services.

The base station 200 comprises the base station transceiver apparatus 20, which is implemented as CARA transaction scheduler 20 with context usage and/or signaling. Moreover, the transaction scheduler 20 interacts with scheduling queues 202, in which data buffers for different transactions are located. The transaction scheduler 20 as well as the scheduling queues 202 interact with the wireless network 204, the lower layers thereof, respectively. Similar to mobile transceiver 100 the wireless network 204 may provide transport layer services in terms of LTE layer 2 or IP to the transaction scheduler 20 and the scheduling queues 202. The scheduling queues 202 communicate or interact with the Internet 300, which in the present embodiment also comprises the data server 300. As can be seen from Fig. 2, the two wireless network entities 108 and 204 exchange user data, i.e. payload data packets, and signaling data, i.e. control data packets. Between the transaction manager 10 on the mobile transceiver side 100 and the transaction scheduler 20 on the base station transceiver 200 side a context protocol is established, e.g. a transaction protocol.

In the present embodiment transactions can be considered as a data unit or data packet that represents application-layer data flows at the DLC. A transaction may include all DLC frames from the user's first request at the application layer (e.g., the load of a web-page) until the result is delivered to the user (i.e., all elements included in that web-page). Transactions may include information on the application's QoS requirements and a mapping of the link-layer frames to the transaction. This information is collected in a handheld agent, i.e. the CARA transaction manager 10 in Fig. 2. In many cases, the transaction manager 10 can extract the context information on requirements from applications, platform libraries (e.g., Android Application Programming Interface, API) or the operating system (e.g., Linux Kernel). Identification of downlink data packets belonging to a transaction can be often be accomplished with a 5-tuple in the IP header and the stream positions of the transport layer denoting "start" and "end".

On the base station transceiver 200 side, the means for scheduling 26 is operable to determine a transmission sequence for a plurality of transactions. The plurality of transactions refers to a plurality of applications being run by one or more mobile transceivers 100. Hence a transaction corresponds to a plurality of data packets for which the context information indicates unity. This is also indicated in Fig. 2 by the multiple scheduling queues 202, each of which may hold or buffer payload data packets for one transmission.

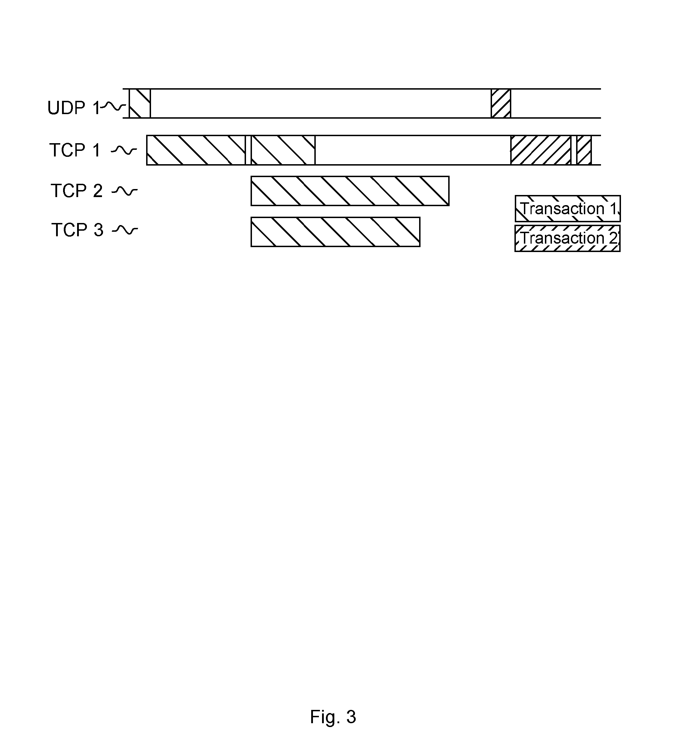

The transaction manager 10 can extract this information from the network socket in use by the regarded application. An example for using transactions to map application data to flows is given in Fig. 3. Fig. 3 illustrates two transactions, "transaction 1" and "transaction 2" in an embodiment. Moreover, Fig. 3 shows different UDP and Transmission Control Protocol (TCP) connections "UDP 1", "TCP 1", "TCP 2", "TCP 3". Depending on the application, multiple transport layer connections (e.g. using TCP may belong to the same transaction (e.g. Transaction 1) or one connection may contain multiple transactions (e.g., TCP1). Each transport layer session includes IP packets and DLC frames that are scheduled at the BS 200.

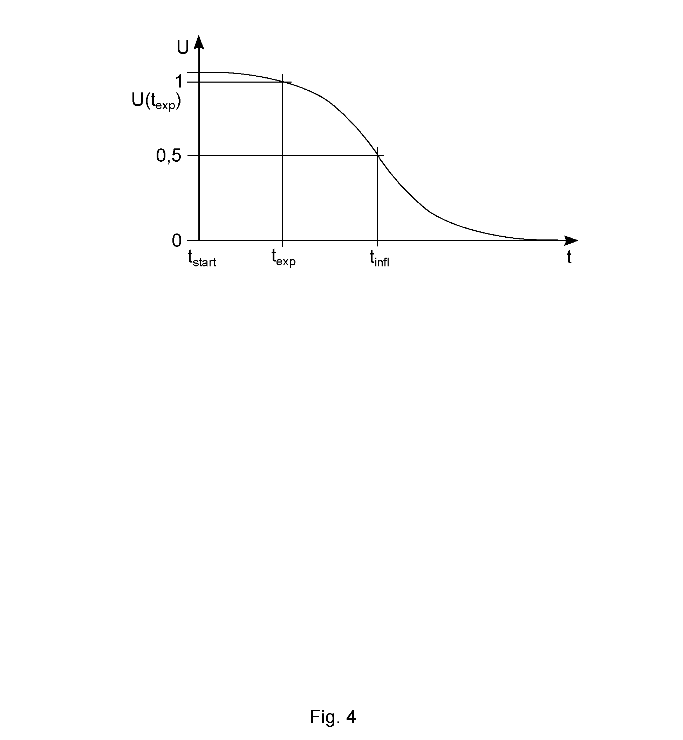

A transaction's QoS requirement can be expressed by a utility function. For example, for a transaction belonging to a web-surfing session inside a web-browser, the user is satisfied when a web-page is shortly shown after requesting it. This can be expressed as a delay-dependent utility function as shown in Fig. 4, which states the transaction's utility in terms of its finish time, i.e. the time when the user can see the result. The CARA transaction scheduler can leverage such context information to substantially increase the QoS for all users per cell, cf. M. Proebster et al. Fig. 4 illustrates a utility function *U(t)* versus time *t.* The utility function expresses a user's satisfaction for a varying communication delay *t.* At a starting time *tₛₜₐᵣₜ* the utility function is at its maximum value, which is normalized to 1 in Fig. 4. After an expectation time, i.e. a time, which a user may expect to wait for the transaction, the *U(t)* has decreased only a little bit, but not significantly. After the expectation time *U(t)* starts decreasing faster until it reaches its maximum decreasing rate after inflection time *t_{infl}*. An order of a sequence of transactions to be scheduled can then be based on their respective utility functions.

The transmission sequence can, for example, be determined from an iteration of multiple different sequences of transactions. The multiple different sequences correspond to different permutations of the plurality of transactions. In the base station transceiver apparatus 20 the means for scheduling 26 is operable to determine the sum utility function for each of the multiple different sequences and is further operable to select the transmission sequence from the multiple different sequences corresponding to a maximum sum of the utility functions. The means for scheduling 26 can be further operable to modify the transmission sequence based on a supportable data rate for each transaction, which can be determined through measurements and according reports received from the mobile transceiver 100, e.g. in terms of CQI.

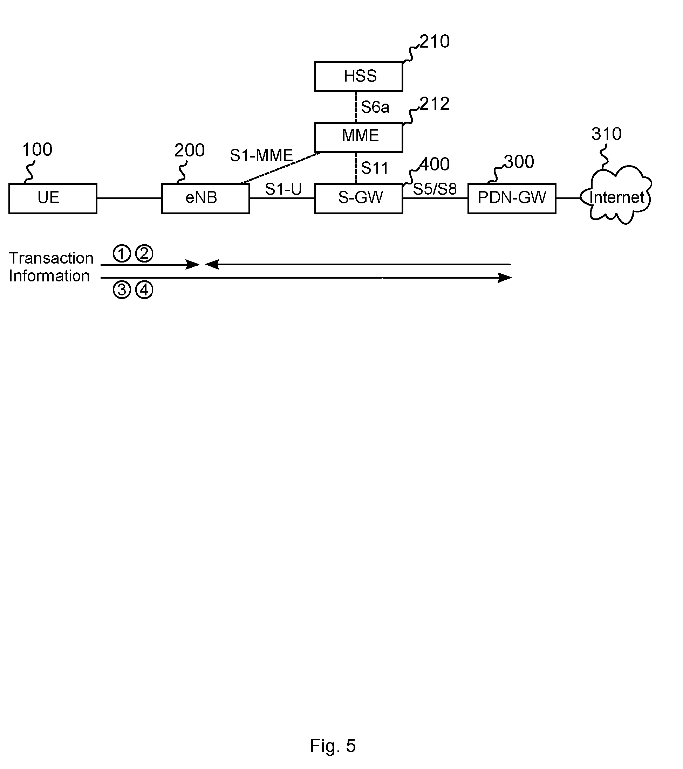

Components of the 3GPP EPC for signaling transaction information as well as the signaling paths are shown in Fig. 5. Fig. 5 shows a mobile transceiver or UE 100, a base station transceiver or eNodeB 200, a Home Subscriber Server (HSS) 210, a Mobility Management Entity (MME) 212, a Serving-GateWay (S-GW) 400 and a PDN-GW 300, which is connected to the Internet 310. As Fig. 5 further shows, the eNodeB 200 communicates with the S-GW 400 using the S1-User plane (S1-U) protocol. The eNodeB 200 further uses the S1-MME protocol to communicate with the MME 212. Moreover, the PDN-GW 300 communicates with the S-GW 400 using the S5/S8 protocols. The HSS 210 communicates with the MME 212 using the S6a protocol and the MME 212 uses the S11 protocol to communicate with the S-GW 400. More details on these components and protocols can be found in the 3GPP specifications. In the following, HSS 210 and MME 212 are neglected as they are not required for signaling.

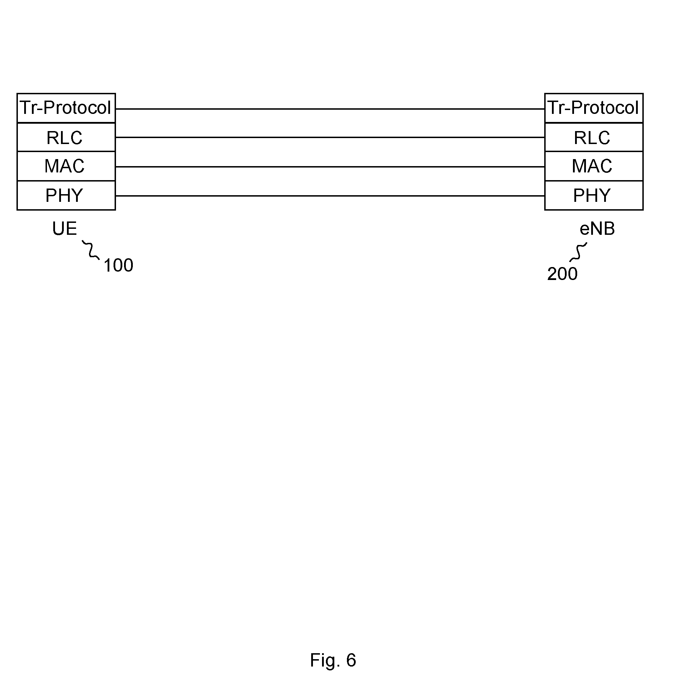

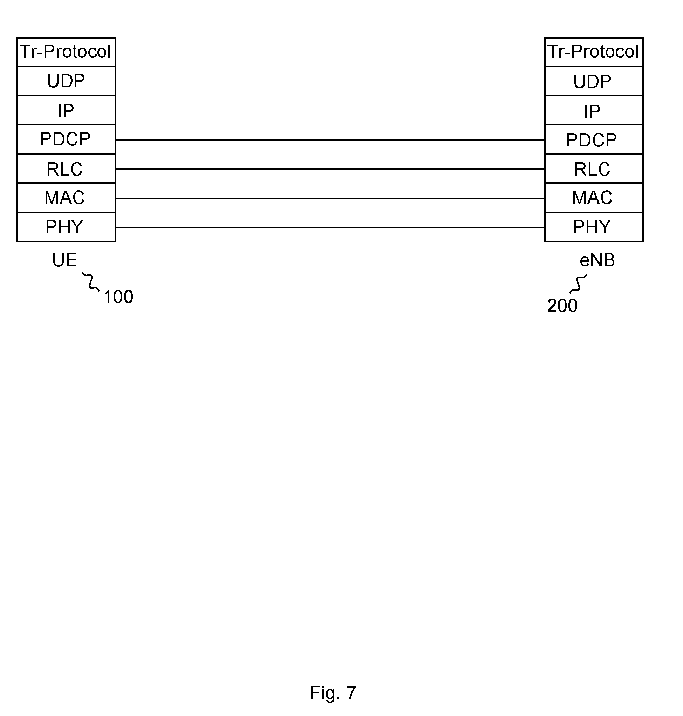

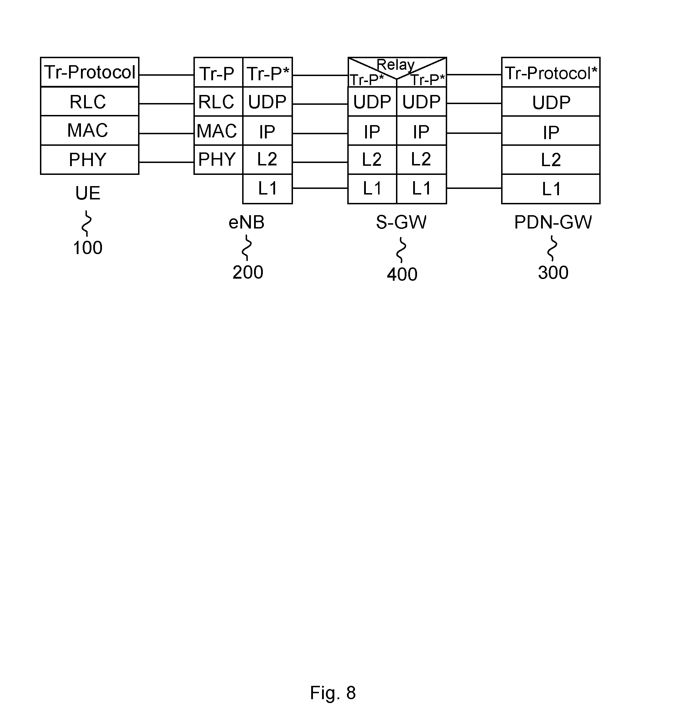

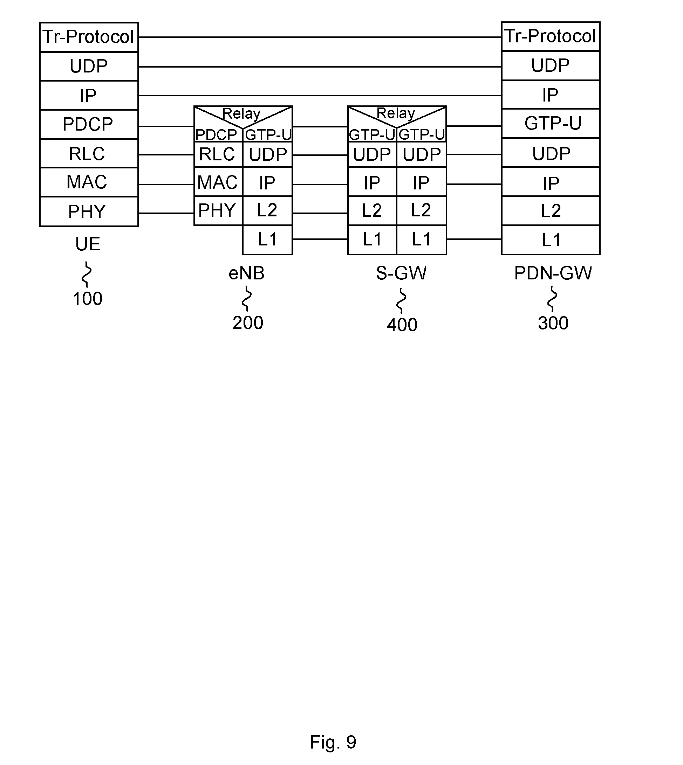

The arrows at the bottom of Fig. 5 illustrate signaling paths of embodiments, which will be detailed subsequently. The short arrow having the circled 1 and 2 above represents the signaling paths of the embodiments described in Figs. 6 and 7, which use direct communication between the UE 100 and the eNB 200. The long arrow going from the UE 100 to the PDN-GW 300 and back to the eNB 200 having the circled 3 and 4 underneath represents the signaling paths of the embodiments described in Figs. 8 and 9, which use indirect communication from the UE 100 to the eNB 200 via the PDN-GW 300.

In the following a first embodiment will be described, which uses direct control-plane signaling. Fig. 6 illustrates the protocol stacks in this embodiment. On the UE 100 side Fig. 6 depicts layer 1 or PHY, layer 2 as MAC and RLC, and a transaction protocol "Tr-Protocol" on top of RLC.

Hence, in this embodiment the mobile transceiver apparatus 10 further comprises means for composing a transaction data packet as part of the transaction protocol "Tr-Protocol". The transaction data packet comprises the context information. In the embodiment the UE 100 uses a dedicated control channel between the UE 100 and the eNB 200. Fig. 6 shows the layered stacks on each device. Lines between peer entities indicate a direct communication between those entities; higher layer entities use the services of lower layer entities. The transaction information is directly transported with a signaling protocol above the RLC layer as no addressing or routing is required. The transaction protocol contains QoS requirements and classification rules of the transactions. The eNB 200 receives and processes all protocol information. The context information is communicated to the base station transceiver 200 using a link layer protocol control data packet.

Hence, the means for obtaining 24 at the eNodeB 200 is operable to obtain the context information from the transaction data packet as part of the transaction protocol. The transaction data packet or the context information is received from the mobile transceiver 100 using a link layer protocol control data packet. In the present embodiment the eNB 200 classifies downlink data packets, i.e. it may perform header inspection and queue packets of different transactions separately, cf. indication 202 in Fig. 2. The QoS requirement can be directly forwarded to the MAC layer scheduler 20 within the eNB 200.

In the following another embodiment will be described, which makes use of direct user-plane signaling. Fig. 7 illustrates protocol stacks in an embodiment making use of signaling in a user or data plane between a UE 100 and an eNB 200. Compared to the previous embodiment shown in Fig. 6 the transaction protocol uses UDP, with underlying IP, PDCP, and the lower layers as described above. The signaling information is transported from the UE 100 to the eNB 200 at the application layer. The UE 100 can address the base station 200 via IP any-cast, as the base station 200 is the gateway to the network from the perspective of the UE100. As signaling information usually does not extend over multiple IP packets and RLC mechanisms can prohibit packet losses, when being used in acknowledged mode, between UE 100 and eNB 200, it is sufficient to use a connectionless User Datagram Protocol (UDP) stream for signaling. Optionally, a simple acknowledgement-mechanism from the eNB could be devised. Hence, in the present embodiment the transaction data packet is communicated to the base station transceiver 200 using an any-cast payload data packet. The any-cast payload data packet can correspond to an IP-packet with a TOS indication or a UDP-packet with a destination port indication. For the classification the eNB 200 has the same capabilities as in the previous embodiment.

Another embodiment using indirect control-plane signaling will be described subsequently. Fig. 8 illustrates protocol stacks in an embodiment making use of a dedicated control channel and downlink packet classification in a data server 300, which is implemented as PDN-GW 300. In this embodiment, the transaction signaling protocol is transported to the eNB 200 as in the embodiment described with Fig. 6. The eNB 200 then forwards the transactions' QoS requirements to the MAC scheduler 20 and classification information via UDP to the PDN-GW 300 using a separate protocol. The S-GW 400 just serves as relay in this embodiment. Towards the S-GW 400 and between the S-GW 400 and the PDN-GW 300 the lower layers are labeled as layer 1 (L1) and layer 2 (L2). As indicated in Fig. 8 by the "*" a modified transaction protocol "Tr-P*" is used to communicate the context information as classification information from the eNB 200 to the PDN-GW 300 via the S-GW 400. The classification information can correspond to the QoS settings or requirements for a scheduler queue or a transaction context at the scheduler 20 of the base station transceiver 200. At the base station transceiver 200 the context information is hence received from the data server 300, which is provided with classification information from the base station transceiver 200.

The PDN-GW 300 is foreseen in the standards to be able to perform DPI. Thus, it can classify downlink data packets according to the signaled information. After the PDN-GW 300 has classified the data packets, it informs the eNB 200 about the classification. As EPC employs a flat IP architecture, Differentiated Services Field Codepoints (DSCP) in the IP header can be used to differentiate between transactions. This way, 64 transactions can be differentiated for a single UE at a time in IPv4. With IPv6, even more transactions (220-1) can be differentiated by the flow label. The context information can hence correspond to a tag in a data packet received from the data server 300.

Another embodiment uses indirect user-plane signaling. Fig. 9 illustrates protocol stacks in an embodiment making use of signaling in a data plane with indirect provision of context information. Fig. 9 shows the signaling between UE 100 and PDN-GW 300 via the data plane. The eNB 200 uses the General packet radio service Tunneling Protocol in the User-plane (GTP-U) to forward the respective data packet to the S-GW 400, which also uses GTP-U to forward the same to the PDN-GW 300. As it is also indicated in Fig. 9 the eNB 200 and the S-GW 400 are considered as relays. The protocol stacks at the respective components are similar to those described above.

Packet classification is carried out at the PDN-GW 300, which also forwards transaction requirements to the eNB 200. The embodiments shown in Fig. 9 employ application layer transport for signaling from the UE 100 to the PDN-GW 300. This can be accomplished by IP any-cast or unicast (in case the IP-address of the PDN-GW 300 is known), in line with the above description. The transaction data packet is received at the PDN-GW 300 from the mobile transceiver 100 using an any-cast or a unicast payload data packet. The PDN-GW 300 signals the QoS requirements of the transactions back to the eNB 200 over a separate protocol. In some embodiments multiple PDN-GWs may serve the mobile transceiver 100. In this case an any-cast payload data packet can be received by one PDN-GW, which can then inform the others, or, although this may then rather refer to a multi-cast payload data packet, the multiple PDN-GWs may all receive the multicast (any-cast) data packet. In this embodiment, classification is performed in the PDN-GW 300 as in the embodiment described with Fig. 8. In embodiments the transaction data packet can be communicated to the data server 300 using a unicast payload data packet, e.g. the UE 100 addresses an IP-packet directly to the PDN-GW 300.

Hence, the data server apparatus 30 comprises means for composing a data packet, e.g. in line with the Tr-P*. The data packet comprises application data packets and a tag with mapping information for the data packet to a scheduling queue at the base station transceiver 200. A transaction data packet can be composed, which comprises application data packets and the context information. In some embodiments a data packet header with the context information or a data packet comprising a quality of service requirement of the application can be composed.

The embodiments described with Figs. 6 and 7 assume that the eNB 200 is able to inspect at least the IP and transport protocol headers for classifying downlink data packets. However, in an LTE system this may not be the case as data can be tunneled (e. g. via the tunneling protocol GTP-U) and/or encrypted between the PDN-GW 300 and UE 100. Therefore the embodiments described with Figs. 8 and 9 may have the advantage that they would allow for lower processing capabilities at the eNB 200.

The mobile device 100 may not differentiate between the embodiments of Figs. 7 and 9, neither between the embodiment of Figs. 6 and 8. For the mobile device 100 only the type of signaling is known.

In the following an exemplary embodiment of a transaction signaling protocol is described. The following protocol description is a simplified, text-based realization of the signaling for CARA. Signaling is sent (unidirectional) by the UE 100 to the eNB 200 (or PDN-GW 300) as described above. The protocol is text based and encoding is AN-SI\_X3.4-1968 (7 bit ASCII). Lines are delimited by "\n" (ASCII code 0x0A), fields are delimited by a single whitespace. Each transaction is formulated by a sequence of lines.

The first line starts with the keyword "Transaction". Each following line formulates one traffic chunk, usually a section of a transport layer connection. The signaling for each transaction is sent as a single UDP datagram. The destination address for these datagrams is configured manually. The destination port is 1024 and the source IP address is the IP address of each UE 100 and the source port is insignificant. The client can resend the transaction specification whenever requirements, chunks or size prediction have changed. These resends may not be incremental. That means that when resending, all chunks may be repeated. Uplink and downlink chunks can be identified using a routing table, therefore there is no need to specify it explicitly. Depending on the application media, a transaction can be of the types:
- FINISH: The time of completion of the transmission is important (the earlier, the better); e.g. Web-surfing
- REALTIME: Each packet has an individual deadline; e.g. voice-calls / live-TV
- STREAMING: Buffering of content is possible, however, the transmission should not fall below the play-out curve; e.g. buffered video streaming in YouTube

An example transaction definition looks as follows:
Transaction web42 FINISH 2300
TCP 10.0.0.10 1025 2.3.4.5 80 0 1200
TCP 2.3.4.5 80 10.0.0.10 1025 0 17000
TCP 2.3.4.5 80 10.0.0.10 1026 0 17000

The Extended Backus-Naur-Form (EBNF) for this protocol is as follows:
Message Transaction
Transaction "Transaction" Name Requirement "\n" {Chunk}
Requirement "FINISH" Finish-Time | "REALTIME" Deadline | "STREAMING" Bandwidth
Chunk Filter Start Stop "\n"
Filter "TCP" SrcIP SrcPort DstIP DstPort "UDP" SrcIP SrcPort DstIP DstPort
Name An arbitrary name for the transaction (could also be an ID-number)
SrcIP, DstIP text representation of IPv4/IPv6 address
SrcPort, DstPort decimal
Start, Stop These parameters allow to specify, which bytes of this transport layer connection belong the transaction. In case the length is not known, a prediction has to be specified by the client.
Finish-Time in ms relative to the time the signaling message is received
Deadline in ms per packet
Bandwidth in bit/s

This is a simple example. Instead of scalar requirements (Finish-Time, Deadline, Bandwidth), also complete utility curves, as described above, could be signaled in embodiments. E.g. with function type and relevant parameters or as a table of (x,y)-values.

In the following an exemplary use case of an embodiment will be described. A user clicks on a link in a web-browser. The mobile device 100 initiates a TCP connection with the web server 300 and signals a new transaction to the base station 200 containing the requirement and the IP 5-tuple to be in use. When the first downlink DLC frame arrives at the BS 200, it can use the signaled classification to map the frame to the transaction and its requirements. After connection setup, the mobile device 100 sends a HTTP request to the server 300. As soon as the HTTP response header arrives at the mobile device 100, it can send a transaction update containing the predicted content size to the BS 200. Studies have shown that, for a typical Internet traffic mix, the signaling overhead of this signaling protocol is only 0.2% of the downlink data traffic.

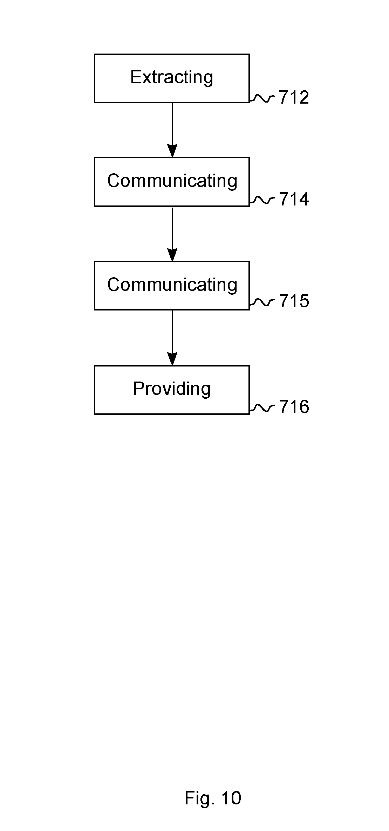

Fig. 10 shows a block diagram of a flow chart of an embodiment of a method for a mobile transceiver 100 in a mobile communication system 500. The mobile communication 500 system further comprises a base station transceiver 200. The method comprising a step of extracting 712 context information from an application being run on the mobile transceiver 100, context information from an operation system being run on the mobile transceiver 100, or context information from hardware drivers or hardware of the mobile transceiver 100, the context information comprising information on a state of the application and/or information on a state of the mobile transceiver 100. The method further comprises a step of communicating 714 data packets with the base station transceiver 200, wherein the data packets comprise payload data packets and control data packets. The method further comprises a step of communicating 715 payload data packets associated with the application with a da-ta server 300 through the base station transceiver 200 and a step of providing 716 the context information to the base station transceiver 200, wherein the context information is comprised in a payload data packet or in a control data packet.

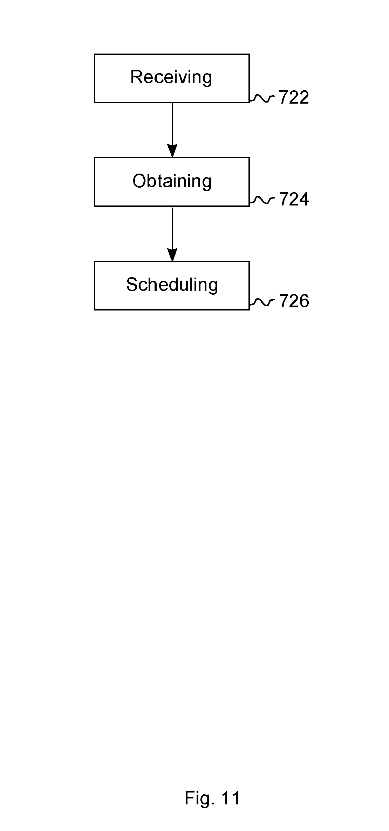

Fig. 11 shows a block diagram of a flow chart of an embodiment of a method for a base station transceiver 200 in a mobile communication system 500. The mobile communication system 500 further comprises a mobile transceiver 100. The method comprises a step of receiving 722 control data packets and payload data packets, wherein the payload data packets are associated with an application being run on the mobile transceiver 100. The method comprises a further step of obtaining 724 context information on the data packets associated with the application from a control data packet or from a payload data packet. The method comprises a further step of scheduling 726 the mobile transceiver 100 for transmission of the data packets based on the context information.

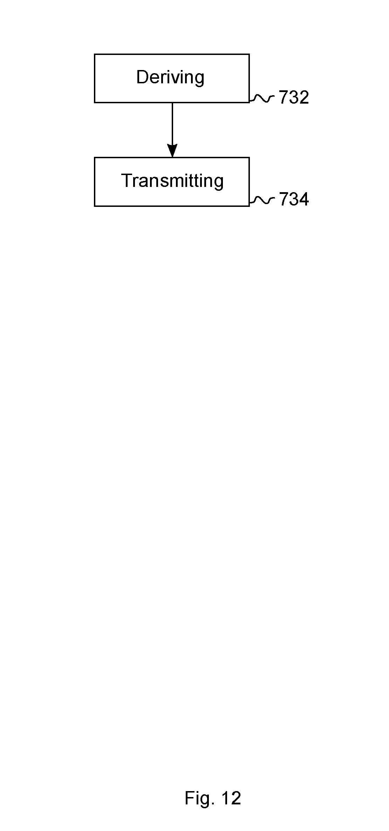

Fig. 12 shows a block diagram of a flow chart of an embodiment of a method for a data server 300, which communicates data packets associated with an application being run on a mobile transceiver 100 through a mobile communication system 500 to the mobile transceiver 100. The method comprises a step of deriving 732 context information for the data packets based on classification information received from a base station transceiver 200 and a step of transmitting 734 the context information along with the data packets to the mobile communication system 500.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is operable for performing a certain function, respectively. Hence, a "means for s.th." may as well be understood as a "means being operable or suited for s.th.". A means being operable for performing a certain function does, hence, not imply that such means necessarily is performing said function (at a given time instant).

The functions of the various elements shown in the Figures, including any functional blocks labeled as "means", "means for extracting", "means for communicating", "means for providing" , "means for receiving" , "means for obtaining" , "means for scheduling" , "means for deriving" , "means for transmitting", etc., may be provided through the use of dedicated hardware, as e.g. a processor, "an extractor", "a communicator", "a provider", "a receiver", "an obtainer", "a scheduler ", "a deriver", "a transmitter", etc., as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (10) for a mobile transceiver (100) for a mobile communication system (500), the mobile communication (500) system comprising a base station transceiver (200), the apparatus (10) comprising
means for extracting (12) context information from an application being run on the mobile transceiver (100), context information from an operation system being run on the mobile transceiver (100), or context information from hardware drivers or hardware of the mobile transceiver (100), the context information comprising information on a state of the application and/or information on a state of the mobile transceiver (100), wherein the context information comprises information on whether the application is currently displayed in a foreground or in a background of the mobile transceiver (100);
means for communicating (14) data packets with the base station transceiver (200), wherein the data packets comprise payload data packets and control data packets, and wherein the means for communicating (14) is operable to communicate payload data packets associated with the application with a data server (300) through the base station transceiver (200); and
means for providing (16) the context information to the base station transceiver (200) of the mobile communication system (500) so that the base station transceiver (200) schedules transmission of data packets according to the context information, wherein the context information is comprised in a payload data packet or in a control data packet.

2. The apparatus (10) of claim 1, wherein the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver (100), information on a current location, speed, orientation of the mobile transceiver (100), or a distance of the mobile transceiver (100) to another mobile transceiver.

3. The apparatus (10) of claim 1, further comprising means for composing a transaction data packet as part of a transaction protocol, the transaction data packet comprising the context information, wherein the transaction data packet is communicated to the base station transceiver (200) using an any-cast payload data packet, wherein the transaction data packet is communicated to the data server (300) using a unicast payload data packet, or wherein the transaction data packet or the context information is communicated to the base station transceiver (200) using a Link Layer protocol control data packet.

4. An apparatus (20) for a base station transceiver (200) for a mobile communication system (500), the mobile communication system (500) further comprising a mobile transceiver (100), the apparatus (20) comprising
means for receiving (22) control data packets and payload data packets, wherein the payload data packets are associated with an application being run on the mobile transceiver (100);
means for obtaining (24) context information associated with the application from a control data packet or from a payload data packet, wherein the context information comprises information on whether the application is currently displayed in a foreground or in a background of the mobile transceiver (100); and
means for scheduling (26) the mobile transceiver (100) for transmission of the data packets based on the context information.

5. The apparatus (20) of claim 4, wherein the means for obtaining (24) is operable to obtain the context information from a transaction data packet as part of a transaction protocol, wherein the transaction data packet is received from the mobile transceiver (100) using an any-cast payload data packet, wherein the transaction data packet is received from a data server (300) using a unicast payload data packet, wherein the transaction data packet or the context information is received from the mobile transceiver (100) using a Link Layer protocol control data packet, or wherein the context information is received from the data server (300), which is provided with classification information from the base station transceiver (200), wherein the context information corresponds to a tag in a data packet received from the data server (300).

6. The apparatus (20) of claim 4, wherein the means for scheduling (26) is operable to determine a transmission sequence for a plurality of transactions, the plurality of transactions referring to a plurality of applications being run by one or more mobile transceivers (100), a transaction corresponding to a plurality of data packets for which the context information indicates unity, an order of the sequence of transactions being based on a utility function, the utility function depending on a completion time of a transaction, which is determined based on the context information, and/or
wherein the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver (100), information on a current location, speed, orientation of the mobile transceiver (100), mapping information between one or more data packets and a scheduling queue, or a distance of the mobile transceiver (100) to another mobile transceiver.

7. The apparatus (20) of claim 6, wherein the transmission sequence is determined from an iteration of multiple different sequences of transactions, where the multiple different sequences correspond to different permutations of the plurality of transactions, wherein the means for scheduling (26) is operable to determine the utility function for each of the multiple different sequences and is further operable to select the transmission sequence from the multiple different sequences corresponding to a maximum of the utility function, and/or wherein the means for scheduling (26) is operable to further modify the transmission sequence based on the supportable data rate for each transaction.

8. An apparatus (30) for a data server (300), the data server (300) communicating data packets associated with an application being run on a mobile transceiver (100) through a base station transceiver (200) of a mobile communication system (500) to the mobile transceiver (100), the apparatus (30) comprising
means for deriving (32) context information for the data packets based on classification information received from the base station transceiver (200), the classification information comprising quality of service settings or requirements for a scheduler queue at the base station transceiver (200), or a transaction context at the scheduler of the base station transceiver (200); and
means for transmitting (34) the context information along with the data packets to the base station transceiver (200) of the mobile communication system (500) so that the base station transceiver (200) schedules transmission of data packets according to the context information, **characterised in that**
the context information comprises information on whether the application is currently displayed in a foreground or in a background of the mobile transceiver (100).

9. The apparatus (30) of claim 8, wherein the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver (100), information on a current location, speed, orientation of the mobile transceiver (100), mapping information between one or more data packets and a scheduling queue, or a distance of the mobile transceiver (100) to another mobile transceiver and wherein the means for deriving (32) is operable to extract the context information from a unicast payload data packet received from the mobile transceiver (100) or from a unicast payload data packet from the base station transceiver (200).

10. The apparatus (30) of claim 8, further comprising means for composing a data packet, the data packet comprising application data packets and a tag with mapping information for the data packet to a scheduling queue at the base station transceiver (200), for composing a transaction data packet, the transaction data packet comprising application data packets and the context information, for composing a data packet header with the context information, or for composing a data packet comprising a quality of service requirement of the application.

11. A method for a mobile transceiver (100) in a mobile communication system (500), the mobile communication (500) system further comprising a base station transceiver (200), the method comprising
extracting (712) context information from an application being run on the mobile transceiver (100), context information from an operation system being run on the mobile transceiver (100), or context information from hardware drivers or hardware of the mobile transceiver (100), the context information comprising information on a state of the application and/or information on a state of the mobile transceiver (100), wherein the context information comprises information on whether the application is currently displayed in a foreground or in a background of the mobile transceiver (100);
communicating (714) data packets with the base station transceiver (200), wherein the data packets comprise payload data packets and control data packets; communicating (715) payload data packets associated with the application with a da-ta server (300) through the base station transceiver (200); and
providing (716) the context information to the base station transceiver (200) of the mobile communication system (500) so that the base station transceiver (200) schedules transmission of data packets according to the context information, wherein the context information is comprised in a payload data packet or in a control data packet.

12. A method for a base station transceiver (200) in a mobile communication system (500), the mobile communication system (500) further comprising a mobile transceiver (100), the method comprising
receiving (722) control data packets and payload data packets, wherein the payload data packets are associated with an application being run on the mobile transceiver (100);
obtaining (724) context information on the data packets associated with the application from a control data packet or from a payload data packet, wherein the context information comprises information on whether the application is currently displayed in a foreground or in a background of the mobile transceiver (100); and
scheduling (726) the mobile transceiver (100) for transmission of the data packets based on the context information.

13. A method for a data server (300), the data server (300) communicating data packets associated with an application being run on a mobile transceiver (100) through a base station transceiver (200) of a mobile communication system (500) to the mobile transceiver (100), the method comprising
deriving (732) context information for the data packets based on classification information received from the base station transceiver (200), the classification information comprising quality of service settings or requirements for a scheduler queue at the base station transceiver (200), or a transaction context at the scheduler of the base station transceiver (200); and
transmitting (734) the context information along with the data packets to the base station transceiver (200) of the mobile communication system (500), so that the base station transceiver schedules transmission of data packets according to the context information, **characterised in that** the context information comprises information on whether the application is currently displayed in a foreground or in a background of the mobile transceiver (100).

14. A mobile transceiver (100) comprising the apparatus (10) of claim 1, a base station transceiver (200) comprising the apparatus (20) of claim 4, a data server (300) comprising the apparatus (30) of claim 8, and/or a mobile communication system (500) comprising the mobile transceiver (100), the base station transceiver (200), and/or the data server (300).

15. A computer program having a program code for performing one of the methods of claims 11, 12 or 13, when the computer program is executed on a computer or processor.

## Patentansprüche

1. Vorrichtung (10) für einen mobilen Transceiver (100) für ein mobiles Kommunikationssystem (500), wobei das mobile Kommunikationssystem (500) einen Basisstationstransceiver (200) umfasst, wobei die Vorrichtung (10) umfasst:
Mittel für die Extraktion (12) von Kontextinformationen von einer auf dem mobilen Transceiver (100) laufenden Anwendung, Kontextinformationen eines auf dem mobilen Transceiver (100) laufenden Betriebssystems oder Kontextinformationen von Hardwaretreibern oder Hardware des mobilen Transceivers (100), wobei die Kontextinformationen Informationen über den Anwendungsstatus und/oder Informationen über den Status des mobilen Transceivers (100) umfassen, wobei die Kontextinformationen Informationen umfassen, inwiefern die Anwendung derzeit in einem Vorder- oder Hintergrund des mobilen Transceivers (100) angezeigt wird;
Mittel zur Kommunikation (14) von Datenpaketen mit dem Basisstationstransceiver (200), wobei die Datenpakete die Nutzendatenpakete und Steuerdatenpakete umfassen und wobei die Kommunikationsmittel (14) betriebsbereit sind, Payload-Datenpakete zu kommunizieren, die mit der Anwendung mit einem Datenserver (300) durch den Basisstationstransceiver (200) verbunden sind; und
Mittel für die Bereitstellung (16) der Kontextinformationen an den Basisstationstransceiver (200) des mobilen Kommunikationssystems (500), sodass der Basisstationstransceiver (200) die Übertragung der Datenpakete gemäß den Kontextinformationen plant, wobei die Kontextinformationen in einem Nutzdatenoder Steuerdatenpaket enthalten sind.

2. Vorrichtung (10) nach Anspruch 1, wobei die Kontextinformationen ein oder mehrere Elemente der Gruppe von Informationen über die Qualität der Dienstanforderung der Anwendung, wichtige Informationen der mit der Anwendung verbundenen Datenpakete, Informationen über die Einheitlichkeit einer Vielzahl an Datenpaketen der Anwendung, Informationen über den Ladebedarf der Anwendung, Informationen über eine Verzögerung oder Fehlereinschränkungsrate der Anwendung, Informationen über den Fensterstatus, Informationen über den Speicherverbrauch, Informationen über die Prozessornutzung der auf dem mobilen Transceiver (100) laufenden Anwendung, Informationen über einen aktuellen Standort, die Geschwindigkeit und Orientierung des mobilen Transceivers (100) oder eine Entfernung des mobilen Transceivers (100) zu einem anderen mobilen Transceiver umfassen.

3. Vorrichtung (10) nach Anspruch 1, weiterhin umfassend Mittel für das Zusammenstellen eines Transaktionsdatenpakets als Teil eines Übertragungsprotokolls, wobei das Transaktionsdatenpaket die Kontextinformationen umfasst, wobei das Transaktionsdatenpaket zum Basisstationstransceiver (200) mithilfe eines Anycast-Nutzdatenpakets übertragen wird, wobei das Transaktionsdatenpaket zum Datenserver (300) mithilfe eines Unicast-Nutzdatenpakets übertragen wird oder wobei das Transaktionsdatenpaket oder die Kontextinformationen zum Basisstationstransceiver (200) mithilfe eines Verbindungsprotokoll-Steuerdatenpakets übertragen werden.

4. Vorrichtung (20) für einen Basisstationstransceiver (200) für ein mobiles Kommunikationssystem (500), wobei das mobile Kommunikationssystem (500) weiterhin einen Basisstationstransceiver (100) umfasst, wobei die Vorrichtung (20) umfasst:
Mittel für den Empfang (22) von Steuerdatenpaketen und Nutzdatenpaketen, wobei die Nutzdatenpakete mit einer auf dem mobilen Transceiver (100) laufenden Anwendung verbunden sind;
Mittel für den Erhalt (24) von mit der Anwendung verbundenen Kontextinformationen von einem Steuerdatenpaket oder von einem Nutzdatenpaket, wobei die Kontextinformationen Informationen umfassen, inwiefern die Anwendung derzeit in einem Vorder- oder Hintergrund des mobilen Transceivers (100) angezeigt wird; und Mittel, um den mobilen Transceiver (100) für die Übertragung von Datenpaketen, basierend auf den Kontextinformationen einzuplanen (26).

5. Vorrichtung (20) nach Anspruch 4, wobei die Mittel für den Erhalt (24) betriebsbereit sind, um Kontextinformationen aus einem Transaktionsdatenpaket als Teil des Transaktionsprotokolls zu erhalten, wobei das Transaktionsdatenpaket vom mobilen Transceiver (100) mithilfe eines Anycast-Nutzdatenpakets empfangen wird, wobei das Transaktionsdatenpaket von einem Datenserver (300) mithilfe eines Unicast-Nutzdatenpakets empfangen wird, wobei das Transaktionsdatenpaket oder die Kontextinformationen vom mobilen Transceiver (100) mithilfe eines Verbindungsprotokoll-Steuerdatenpakets empfangen werden oder wobei die Kontextinformationen von einem Datenserver (300) empfangen werden, der Klassifizierungsinformationen vom Basisstationstransceiver (200) erhält, wobei die Kontextinformationen einem Tag in dem von dem Datenserver (300) erhaltenen Datenpaket entsprechen.

6. Vorrichtung (20) nach Anspruch 4 bei dem die Planungsmittel (26) betriebsbereit sind, um eine Sendungsfolge für eine Vielzahl von Übertragungen zu bestimmen, wobei die Vielzahl von Übertragungen sich auf eine Vielzahl von auf einer oder mehreren mobilen Transceiver (100) laufenden Anwendungen bezieht, wobei eine Transaktion einer Vielzahl von Datenpaketen entspricht, für welche die Kontextinformationen eine Einheitlichkeit kennzeichnen, wobei eine Transaktionsabfolge auf einer Nutzenfunktion basiert, wobei die Nutzenfunktion von einer Ausführungsfrist einer Übertragung abhängt, die basierend auf den Kontextinformationen festgelegt wird und/oder
wobei die Kontextinformationen ein oder mehrere Elemente der Gruppe von Informationen über die Qualität der Dienstanforderung der Anwendung, wichtige Informationen der mit der Anwendung verbundenen Datenpakete, Informationen über die Einheitlichkeit einer Vielzahl von Datenpaketen der Anwendung, Informationen über den Ladebedarf der Anwendung, Informationen über eine Verzögerung oder Fehlereinschränkungsrate der Anwendung, Informationen über einen Fensterstatus, Informationen über den Speicherverbrauch, Informationen über die Prozessornutzung der auf dem mobilen Transceiver (100) laufenden Anwendung, Informationen über einen aktuellen Standort, die Geschwindigkeit und Orientierung des mobilen Transceivers (100), Mappinginformationen zwischen einem oder mehreren Datenpakete und einer Planungswarteschleife oder einer Entfernung des mobilen Transceivers (100) zu einem anderen mobilen Transceiver umfassen.

7. Vorrichtung (20) nach Anspruch 6, wobei die Sendungsfolge durch eine Wiederholung mehrerer verschiedener Abfolgen an Übertragungen festgelegt wird, wobei die verschiedenen Abfolgen verschiedenen Permutationen der Vielzahl von Übertragungen entsprechen, wobei Planungsmittel (26) betriebsbereit sind, um die Nutzenfunktion für jede der mehreren verschiedenen Abfolgen festzulegen und weiterhin betriebsbereit sind, um die Sendungsfolge von den mehreren verschiedenen Abfolgen gemäß einem Maximum der Nutzenfunktion auszuwählen und/oder wobei die Planungsmittel (26) betriebsbereit sind, um die Sendungsfolge basierend auf der tragbaren Datenrate für jede Übertragung weiter zu verändern.

8. Vorrichtung (30) für einen Datenserver (300), wobei der Datenserver (300) durch einen Basisstationstransceiver (200) eines mobilen Kommunikationssystems (500) Datenpakete an den mobilen Transceiver (100) überträgt, verbunden mit einer auf dem mobilen Transceiver (100) laufenden Anwendung, wobei die Vorrichtung (30) umfasst:
Mittel zum Ableiten (32) der Kontextinformationen für die Datenpakete, basierend auf den vom Basisstationstransceiver (200) empfangenen Klassifizierungsinformationen, wobei die Klassifizierungsinformationen die Qualität der Diensteinstellungen oderanforderungen für eine Warteschleife des Steuerprogramms am Basisstationstransceiver (200) oder einen Transaktionskontext beim Steuerprogramm des Basisstationstransceivers (200) umfassen; und
Mittel zur Übertragung (34) der Kontextinformationen zusammen mit den Datenpaketen an den Basisstationstransceiver (200) des mobilen Kommunikationssystems (500), sodass der Basisstationstransceiver (200) die Übertragung der Datenpakete gemäß den Kontextinformationen plant, **dadurch gekennzeichnet, dass** die Kontextinformationen Informationen beinhalten, inwiefern die Anwendung derzeit in einem Vorder- oder Hintergrund des mobilen Transceivers (100) angezeigt wird.

9. Vorrichtung (30) nach Anspruch 8, wobei die Kontextinformationen ein oder mehrere Elemente der Gruppe von Informationen über die Qualität der Dienstanforderung der Anwendung, wichtige Informationen der mit der Anwendung verbundenen Datenpakete, Informationen über die Einheitlichkeit einer Vielzahl von Datenpaketen der Anwendung, Informationen über den Ladebedarf der Anwendung, Informationen über eine Verzögerung oder Fehlereinschränkungsrate der Anwendung, Informationen über den Fensterstatus, Informationen über den Speicherverbrauch, Informationen über die Prozessornutzung der auf dem mobilen Transceiver (100) laufenden Anwendung, Informationen über einen aktuellen Standort, die Geschwindigkeit und Orientierung des mobilen Transceivers (100), Mappinginformationen zwischen einem oder mehrerer Datenpakete und einer Planungswarteschleife oder einer Entfernung des mobilen Transceivers (100) zu einem anderen mobilen Transceiver umfassen und wobei die Ableitungsmittel (32) betriebsbereit sind, um die Kontextinformationen von einem vom mobilen Transceiver (100) empfangenen Unicast-Nutzdatenpaket oder von einem Unicast-Nutzdatenpaket vom Basisstationstransceiver (200) zu extrahieren.

10. Vorrichtung (30) nach Anspruch 8, weiterhin umfassend Mittel zum Zusammenstellen eines Datenpakets, wobei das Datenpaket Anwendungsdatenpakete und einen Tag mit Mappinginformationen für das Datenpaket zu einer Planungswarteschleife am Basisstationstransceiver (200), für das Zusammenstellen eines Transaktionsdatenpakets umfasst, wobei das Transaktionsdatenpaket Anwendungsdatenpakete und die Kontextinformationen, für das Zusammenstellen eines Datenpaketkopfes mit den Kontextinformationen oder für das Zusammenstellen eines Datenpakets, welches die Qualität der Dienstanforderungen der Anwendung umfasst, umfasst.

11. Verfahren für einen mobilen Transceiver (100) in einem mobilen Kommunikationssystem (500), wobei mobile Kommunikationssystem (500) weiterhin einen Basisstationstransceiver (200) umfasst, wobei das Verfahren umfasst Extraktion (712) von Kontextinformationen von einer auf dem mobilen Transceiver (100) laufenden Anwendung, Kontextinformationen eines auf dem mobilen Transceiver (100) laufenden Betriebssystems oder Kontextinformationen von Hardwaretreibern oder Hardware des mobilen Transceivers (100), wobei die Kontextinformationen Informationen über einen Anwendungsstatus und/oder Informationen über einen Status des mobilen Transceivers (100) umfassen, wobei die Kontextinformationen Informationen umfassen, inwiefern die Anwendung derzeit in einem Vorder- oder Hintergrund des mobilen Transceivers (100) angezeigt wird; Kommunikation von Datenpaketen (714) mit dem Basisstationstransceiver (200), wobei die Datenpakete Payload-Datenpakete und Steuerdatenpakete umfassen; Kommunikation von Payload-Datenpaketen, die mit der Anwendung mit einem Datenserver (300) durch den Basisstationstransceivers (200) verbunden sind; und Bereitstellen (716) der Kontextinformationen an den Basisstationstransceiver (200) des mobilen Kommunikationssystems (500), sodass der Basisstationstransceiver (200) die Übertragung der Datenpakete gemäß den Kontextinformationen plant, wobei die Kontextinformationen in einem Nutzdaten- oder Steuerdatenpaket enthalten sind.

12. Verfahren für einen Basisstationstransceiver (200) in einem mobilen Kommunikationssystem (500), wobei das mobile Kommunikationssystem (500) weiterhin einen mobilen Transceiver (100) umfasst, wobei das Verfahren umfasst:
Empfang (722) von Steuerdatenpaketen und Nutzdatenpaketen, wobei die Nutzdatenpakete mit einer auf dem mobilen Transceiver (100) laufenden Anwendung verbunden sind;
Erhalt (724) von mit der Anwendung verbundenen Kontextinformationen über die Datenpakete von einem Steuerdatenpaket oder von einem Nutzdatenpaket, wobei die Kontextinformationen Informationen umfassen, inwiefern die Anwendung derzeit in einem Vorder- oder Hintergrund des mobilen Transceivers (100) angezeigt wird; und
Planung (726) des mobilen Transceivers (100) für die Übertragung von Datenpaketen, basierend auf den Kontextinformationen.

13. Verfahren für einen Datenserver (300), wobei der Datenserver (300) Datenpakete, verbunden mit einer auf dem mobilen Transceiver (100) laufenden Anwendung durch einen Basisstationstransceiver (200) eines mobilen Kommunikationssystems (500) an den mobilen Transceiver (100) überträgt, wobei das Verfahren umfasst:
Ableiten (732) der Kontextinformationen für die Datenpakete, basierend auf den vom Basisstationstransceiver (200) empfangenen Klassifizierungsinformationen, wobei die Klassifizierungsinformationen die Qualität der Diensteinstellungen oderanforderungen für eine Warteschlange des Steuerprogramms am Basisstationstransceiver (200) oder einen Transaktionskontext beim Steuerprogramm des Basisstationstransceivers (200) umfassen; und
Übertragen (734) der Kontextinformationen zusammen mit den Datenpaketen an den Basisstationstransceiver (200) des mobilen Kommunikationssystems (500), sodass der Basisstationstransceiver (200) die Übertragung der Datenpakete gemäß den Kontextinformationen plant, **dadurch gekennzeichnet, dass** die Kontextinformationen Informationen beinhalten, inwiefern die Anwendung derzeit in einem Vorder- oder Hintergrund des mobilen Transceivers (100) angezeigt wird.

14. Mobiler Transceiver (100), umfassend die Vorrichtung (10) nach Anspruch 1, Basisstationstransceiver (200), umfassend die Vorrichtung (20) nach Anspruch 4, Datenserver (300), umfassend die Vorrichtung (30) nach Anspruch 8 und/oder mobiles Kommunikationssystem (500), umfassend den mobilen Transceiver (100), den Basisstationstransceiver (200) und/oder den Datenserver (300).

15. Computerprogramm mit Programmcode für die Durchführung eines der Verfahren nach Anspruch 11, 12 oder 13, wenn das Computerprogramm auf einem Computer oder Prozessor ausgeführt wird.

## Revendications

1. Appareil (10) destiné à un émetteur-récepteur mobile (100) pour un système de communication mobile (500), le système de communication mobile (500) comprenant un émetteur-récepteur de station de base (200), l'appareil (10) comprenant des moyens pour extraire (12) des informations de contexte à partir d'une application en cours d'exécution sur l'émetteur-récepteur mobile (100), des informations de contexte à partir d'un système de fonctionnement en cours d'exécution sur l'émetteur-récepteur mobile (100), ou des informations de contexte à partir de pilotes matériels ou de matériel de l'émetteur-récepteur mobile (100), les informations de contexte comprenant des informations sur un état de l'application et/ou des informations sur un état de l'émetteur-récepteur mobile (100), dans lequel les informations de contexte comprennent des informations sur le fait que l'application est ou non actuellement affichée dans un premier plan ou dans un arrière-plan de l'émetteur-récepteur mobile (100) ;
des moyens pour communiquer (14) des paquets de données avec l'émetteur-récepteur de station de base (200), dans lequel les paquets de données comprennent des paquets de données de charge utile et des paquets de données de commande, et dans lequel les moyens pour communiquer (14) permettent de communiquer des paquets de données de charge utile associés à l'application avec un serveur de données (300) par l'intermédiaire de l'émetteur-récepteur de station de base (200) ; et
des moyens pour fournir (16) les informations de contexte à l'émetteur-récepteur de station de base (200) du système de communication mobile (500) de sorte que l'émetteur-récepteur de station de base (200) planifie une transmission des paquets de données conformément aux informations de contexte, dans lequel les informations de contexte sont comprises dans un paquet de données de charge utile ou dans un paquet de données de commande.

2. Appareil (10) selon la revendication 1, dans lequel les informations de contexte comprennent un ou plusieurs éléments du groupe d'informations sur une exigence de qualité de service de l'application, des informations de priorité des paquets de données associés à l'application, des informations sur une unité d'une pluralité des paquets de données de l'application, des informations sur une charge requise de l'application, des informations sur une contrainte de retard ou de taux d'erreurs de l'application, des informations sur un état de fenêtre, des informations sur une consommation de mémoire, des informations sur une utilisation de processeur de l'application exécutée sur l'émetteur-récepteur mobile (100), des informations sur un emplacement, une vitesse, une orientation actuels de l'émetteur-récepteur mobile (100), ou une distance séparant l'émetteur-récepteur mobile (100) d'un autre émetteur-récepteur mobile.

3. Appareil (10) selon la revendication 1, comprenant en outre des moyens pour composer un paquet de données de transaction dans le cadre d'un protocole de transaction, le paquet de données de transaction comprenant les informations de contexte, dans lequel le paquet de données de transaction est communiqué à l'émetteur-récepteur de station de base (200) en utilisant un paquet de données de charge utile de diffusion aléatoire, dans lequel le paquet de données de transaction est communiqué au serveur de données (300) en utilisant un paquet de données de charge utile de diffusion individuelle, ou dans lequel le paquet de données de transaction ou les informations de contexte est/sont communiqué(es) à l'émetteur-récepteur de station de base (200) en utilisant un paquet de données de commande de protocole de couche de liaison.

4. Appareil (20) destiné à un émetteur-récepteur de station de base (200) pour un système de communication mobile (500), le système de communication mobile (500) comprenant en outre un émetteur-récepteur mobile (100), l'appareil (20) comprenant
des moyens pour recevoir (22) des paquets de données de commande et des paquets de données de charge utile, dans lequel les paquets de données de charge utile sont associés à une application en cours d'exécution sur l'émetteur-récepteur mobile (100) ;
des moyens pour obtenir (24) des informations de contexte associées à l'application à partir d'un paquet de données de commande ou à partir d'un paquet de données de charge utile, dans lequel les informations de contexte comprennent des informations sur le fait que l'application est ou non actuellement affichée dans un premier plan ou dans un arrière-plan de l'émetteur-récepteur mobile (100) ; et
des moyens pour planifier (26) l'émetteur-récepteur mobile (100) pour la transmission des paquets de données sur la base des informations de contexte.

5. Appareil (20) selon la revendication 4, dans lequel les moyens d'obtention (24) permettent d'obtenir les informations de contexte à partir d'un paquet de données de transaction dans le cadre d'un protocole de transaction, dans lequel le paquet de données de transaction provient de l'émetteur-récepteur mobile (100) en utilisant un paquet de données de charge utile de diffusion aléatoire, dans lequel le paquet de données de transaction provient d'un serveur de données (300) en utilisant un paquet de données de charge utile de diffusion individuelle, dans lequel le paquet de données de transaction ou les informations de contexte provient/proviennent de l'émetteur-récepteur mobile (100) en utilisant un paquet de données de commande de protocole de couche de liaison, ou dans lequel les informations de contexte proviennent du serveur de données (300), qui dispose d'informations de classification provenant de l'émetteur-récepteur de station de base (200), dans lequel les informations de contexte correspondent à une étiquette dans un paquet de données provenant du serveur de données (300).

6. Appareil (20) selon la revendication 4, dans lequel les moyens pour planifier (26) permettent de déterminer une séquence de transmission pour une pluralité de transactions, la pluralité de transactions se rapportant à une pluralité d'applications en cours d'exécution par un ou plusieurs émetteurs-récepteurs mobiles (100), une transaction correspondant à une pluralité de paquets de données pour lesquels les informations de contexte indiquent une unité, un ordre de la séquence de transactions étant basé sur une fonction d'utilité, la fonction d'utilité dépendant d'un temps d'achèvement d'une transaction, qui est déterminé sur la base des informations de contexte, et/ou
dans lequel les informations de contexte comprennent un ou plusieurs éléments du groupe d'informations sur une exigence de qualité de service de l'application, des informations de priorité des paquets de données associés à l'application, des informations sur une unité d'une pluralité des paquets de données de l'application, des informations sur une charge requise de l'application, des informations sur une contrainte de retard ou de taux d'erreurs de l'application, des informations sur un état de fenêtre, des informations sur une consommation de mémoire, des informations sur une utilisation de processeur de l'application exécutée sur l'émetteur-récepteur mobile (100), des informations sur un emplacement, une vitesse, une orientation actuels de l'émetteur-récepteur mobile (100), des informations de mise en correspondance entre un ou plusieurs paquets de données et une file d'attente de planification, ou une distance séparant l'émetteur-récepteur mobile (100) d'un autre émetteur-récepteur mobile.

7. Appareil (20) selon la revendication 6, dans lequel la séquence de transmission est déterminée à partir d'une itération de multiples séquences différentes de transactions, où les multiples séquences différentes correspondent à des permutations différentes de la pluralité de transactions, dans lequel les moyens pour planifier (26) permettent de déterminer la fonction d'utilité pour chacune des multiples séquences différentes et permettent en outre de sélectionner la séquence de transmission à partir des multiples séquences différentes correspondant à un maximum de la fonction d'utilité, et/ou dans lequel les moyens de planification (26) permettent de modifier davantage la séquence de transmission sur la base du débit binaire supportable pour chaque transaction.

8. Appareil (30) pour un serveur de données (300), le serveur de données (300) communiquant des paquets de données associés à une application en cours d'exécution sur un émetteur-récepteur mobile (100) par l'intermédiaire d'un émetteur-récepteur de station de base (200) d'un système de communication mobile (500) à l'émetteur-récepteur mobile (100), l'appareil (30) comprenant des moyens pour déduire (32) des informations de contexte pour les paquets de données sur la base d'informations de classification provenant de l'émetteur-récepteur de station de base (200), les informations de classification comprenant des paramètres ou des exigences de qualité de service pour une file d'attente du planificateur au niveau de l'émetteur-récepteur de station de base (200), ou un contexte de transaction au niveau du planificateur de l'émetteur-récepteur de station de base (200) ; et
des moyens pour transmettre (34) les informations de contexte avec les paquets de données à l'émetteur-récepteur de station de base (200) du système de communication mobile (500) de sorte que l'émetteur-récepteur de station de base (200) planifie une transmission des paquets de données conformément aux informations de contexte, **caractérisé en ce que** les informations de contexte comprennent des informations sur le fait que l'application est ou non actuellement affichée dans un premier plan ou dans un arrière-plan de l'émetteur-récepteur mobile (100).

9. Appareil (30) selon la revendication 8, dans lequel les informations de contexte comprennent un ou plusieurs éléments du groupe d'informations sur une exigence de qualité de service de l'application, des informations de priorité des paquets de données associés à l'application, des informations sur une unité d'une pluralité des paquets de données de l'application, des informations sur une charge requise de l'application, des informations sur une contrainte de retard ou de taux d'erreurs de l'application, des informations sur un état de fenêtre, des informations sur une consommation de mémoire, des informations sur une utilisation de processeur de l'application exécutée sur l'émetteur-récepteur mobile (100), des informations sur un emplacement, une vitesse, une orientation actuels de l'émetteur-récepteur mobile (100), des informations de mise en correspondance entre un ou plusieurs paquets de données et une file d'attente de planification, ou une distance séparant l'émetteur-récepteur mobile (100) d'un autre émetteur-récepteur mobile et dans lequel les moyens de déduction (32) permettent d'extraire les informations de contexte à partir d'un paquet de données de charge utile de diffusion individuelle provenant de l'émetteur-récepteur mobile (100) ou à partir d'un paquet de données de charge utile de diffusion individuelle provenant de l'émetteur-récepteur de station de base (200).

10. Appareil (30) selon la revendication 8, comprenant en outre des moyens pour composer un paquet de données, le paquet de données comprenant des paquets de données d'application et une étiquette avec des informations de mise en correspondance pour le paquet de données avec une file d'attente de planification au niveau de l'émetteur-récepteur de station de base (200), pour composer un paquet de données de transaction, le paquet de données de transaction comprenant des paquets de données d'application et les informations de contexte, pour composer un en-tête de paquet de données avec les informations de contexte, ou pour composer un paquet de données comprenant une exigence de qualité de service de l'application.

11. Procédé destiné à un émetteur-récepteur mobile (100) dans un système de communication mobile (500), le système de communication mobile (500) comprenant en outre un émetteur-récepteur de station de base (200), le procédé comprenant les étapes suivantes
extraire (712) des informations de contexte à partir d'une application en cours d'exécution sur l'émetteur-récepteur mobile (100), des informations de contexte à partir d'un système de fonctionnement en cours d'exécution sur l'émetteur-récepteur mobile (100), ou des informations de contexte à partir de pilotes matériels ou de matériel de l'émetteur-récepteur mobile (100), les informations de contexte comprenant des informations sur un état de l'application et/ou des informations sur un état de l'émetteur-récepteur mobile (100), dans lequel les informations de contexte comprennent des informations sur le fait que l'application est ou non actuellement affichée dans un premier plan ou dans un arrière-plan de l'émetteur-récepteur mobile (100) ;
communiquer (714) des paquets de données avec l'émetteur-récepteur de station de base (200), dans lequel les paquets de données comprennent des paquets de données de charge utile et des paquets de données de commande ;
communiquer (715) des paquets de données de charge utile associés à l'application avec un serveur de données (300) par l'intermédiaire de l'émetteur-récepteur de station de base (200) ; et
fournir (716) les informations de contexte à l'émetteur-récepteur de station de base (200) du système de communication mobile (500) de sorte que l'émetteur-récepteur de station de base (200) planifie une transmission des paquets de données conformément aux informations de contexte, dans lequel les informations de contexte sont comprises dans un paquet de données de charge utile ou dans un paquet de données de commande.

12. Procédé destiné à un émetteur-récepteur de station de base (200) dans un système de communication mobile (500), le système de communication mobile (500) comprenant en outre un émetteur-récepteur mobile (100), le procédé comprenant les étapes suivantes
recevoir (722) des paquets de données de commande et des paquets de données de charge utile, dans lequel les paquets de données de charge utile sont associés à une application en cours d'exécution sur l'émetteur-récepteur mobile (100) ;
obtenir (724) des informations de contexte sur les paquets de données associés à l'application à partir d'un paquet de données de commande ou à partir d'un paquet de données de charge utile, dans lequel les informations de contexte comprennent des informations sur le fait que l'application est ou non actuellement affichée dans un premier plan ou dans un arrière-plan de l'émetteur-récepteur mobile (100) ; et planifier (726) l'émetteur-récepteur mobile (100) pour la transmission des paquets de données sur la base des informations de contexte.

13. Procédé pour un serveur de données (300), le serveur de données (300) communiquant des paquets de données associés à une application en cours d'exécution sur un émetteur-récepteur mobile (100) par l'intermédiaire d'un émetteur-récepteur de station de base (200) d'un système de communication mobile (500) à l'émetteur-récepteur mobile (100), l'appareil comprenant déduire (732) des informations de contexte pour les paquets de données sur la base d'informations de classification provenant de l'émetteur-récepteur de station de base (200), les informations de classification comprenant des paramètres ou des exigences de qualité de service pour une file d'attente du planificateur au niveau de l'émetteur-récepteur de station de base (200), ou un contexte de transaction au niveau du planificateur de l'émetteur-récepteur de station de base (200) ; et transmettre (734) les informations de contexte avec les paquets de données à l'émetteur-récepteur de station de base (200) du système de communication mobile (500) de sorte que l'émetteur-récepteur de station de base (200) planifie une transmission des paquets de données conformément aux informations de contexte, **caractérisé en ce que** les informations de contexte comprennent des informations sur le fait que l'application est ou non actuellement affichée dans un premier plan ou dans un arrière-plan de l'émetteur-récepteur mobile (100).

14. Émetteur-récepteur mobile (100) comprenant l'appareil (10) selon la revendication 1, un émetteur-récepteur de station de base (200) comprenant l'appareil (20) selon la revendication 4, un serveur de données (300) comprenant l'appareil (30) selon la revendication 8, et/ou un système de communication mobile (500) comprenant l'émetteur-récepteur mobile (100), l'émetteur-récepteur de station de base (200), et/ou le serveur de données (300).

15. Programme informatique possédant un code de programme pour exécuter un des procédés selon la revendication 11, 12 ou 13 lorsque le programme informatique est exécuté sur un ordinateur ou un processeur.
